# FASCICULE DE BREVET EUROPEEN

(11) **EP 3 877 677 B1**
(45) Date de publication et mention de la délivrance du brevet: **14.02.2024**
(21) Numéro de dépôt: 19801488.8
(22) Date de dépôt: 22.10.2019
(51) Int. Cl.: F16H 63/36, F16H 63/30

(54) **ACTIONNEUR DE SELECTION DE COMMANDE INTERNE DE BOITE DE VITESSES**
WAHLAKTUATOR ZUR INTERNEN STEUERUNG EINES GETRIEBES
INTERNAL CONTROL SELECTION ACTUATOR FOR A GEARBOX

(30) Priorité: 08.11.2018 FR 1871409
(43) Date de publication de la demande: 15.09.2021
(73) Titulaire: Renault s.a.s, 92100 Boulogne Billancourt (FR); NISSAN MOTOR CO., LTD., Yokohama-shi, Kanagawa 221-0023 (JP)
(72) Inventeur: GAILLIARD, Fabien, 92500 Rueil-Malmaison (FR); HMAIMID, Kamel, 95100 ARGENTEUIL (FR); SAHRAOUI, Salim, 95400 VILLIERS-LE-BEL (FR)
(74) Mandataire: Renault Group
(86) Numéro de dépôt international: PCT/EP2019/078635
(87) Numéro de publication internationale: WO 2020/094381

(56) Documents cités:
- EP-A1- 1 329 651
- EP-A2- 2 085 664
- FR-A1- 3 044 063
- KR-A- 20110 029 644

## Description

La présente invention concerne la commande interne des boîtes de vitesses à arbres parallèles à l'aide d'actionneurs de sélection et de passage.

Plus précisément, elle a pour objet un actionneur de sélection de commande interne de boîte de vitesses comportant une clé d'interverrouillage tournant avec un axe de commande, pour sélectionner l'une ou l'autre, d'aux moins deux lignes de vitesses en verrouillant simultanément les lignes non sélectionnées, et solidaire en rotation d'un chariot de passage. Un tel actionneur de sélection est connue de EP 2 085 664 A2 et de EP 1 329 651 A1.

Elle a également pour objet un dispositif de commande interne de boîte de vitesses, comportant un tel actionneur de sélection.

La commande interne des vitesses dans une boîte à arbres parallèles robotisée ou automatisée, s'effectue généralement sous la commande d'actionneurs de passage et de sélection placés sous le contrôle d'une unité de calcul de la transmission ou du groupe motopropulseur. L'actionneur de sélection vient placer en tournant, un crabot de la clé d'interverrouillage autour d'un doigt de passage que le chariot de passage peut alors déplacer en translation pour engager la vitesse choisie. Le bon fonctionnement d'un tel dispositif nécessite un positionnement précis des crabots sur les doigts de passage, dans chaque position de sélection.

Par la publication FR 3 026 808, on connaît un dispositif de commande interne de passage pour boîte automatisée, avec aide au passage intégrée, comportant un axe de commande qui gère les mouvements de passage et de sélection. Cet ensemble comprend une clé d'interverrouillage, et un chariot de passage. L'axe est guidé axialement dans un carter de la boîte de vitesses. Pour assurer la sélection, la clé est soumise à l'action d'un piston actionné par un solénoïde dans un premier sens de rotation, et soumis à l'action contraire d'un ressort de rappel dans un dans le sens contraire, lorsque le piston du solénoïde est relâché.

Dans ce dispositif, la clé d'interverrouillage est soumise à l'action d'un piston de commande dans un sens de rotation, et à la force d'un ressort de « rappel en sélection » en sens inverse. L'action positive du piston sur la clé dans un sens permet de rejoindre avec exactitude la ligne de sélection recherchée. En revanche, la poussée du ressort en sens inverse n'offre pas la même garantie, en cas de décentrage des crabots par rapport aux doigts de passage.

La présente invention vise à résoudre le problème d'imprécision des retours en sélection, rencontrés avec le dispositif connu.

Dans ce but, elle propose d'entraîner la clé d'interverrouillage en rotation par un levier qui est fixé par une première extrémité sur un axe d'actionnement tournant dans les deux sens, et qui agit mécaniquement sur le chariot par sa deuxième extrémité.

De préférence, le levier porte une rotule coopérant avec deux pattes radiales du chariot de passage.

Le chariot de passage peut être déplacé en translation axiale sur la clé, par un actionneur de passage spécifique.

La présente invention sera mieux comprise à la lecture de la description suivante d'un exemple non limitatif de réalisation, en se reportant aux dessins annexés, sur lesquels :

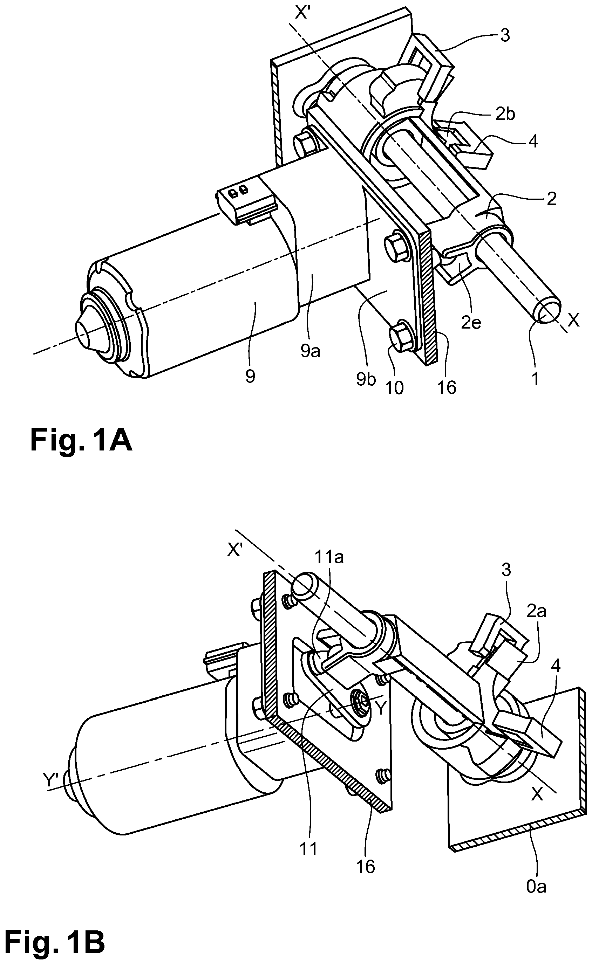

[FIG. 1A] offre une première vue en perspective de l'actionneur de sélection.
[FIG. 1B] offre une deuxième vue en perspective du même actionneur de sélection.
[FIG. 2] montre l'assemblage du moteur électrique.
[FIG. 2A] est une vue éclatée d celui-ci.
[FIG. 2B] montre le montage du levier d'entraînement de la clé d'interverrouillage.
[FIG. 3A] est une vue de côté de l'actionneur dans une première position de sélection.
[FIG. 3B] est une vue de face du levier dans la même position.
[FIG. 4A] est une vue de côté de l'actionneur dans une deuxième position de sélection.
[FIG. 4B] est une vue de face du levier dans la même position.
[FIG. 5A] est une vue en perspective de la clé dans une première position de butée.
[FIG. 5B] est une section selon X, X' de la [FIG. 5A].
[FIG. 5C] est une vue en perspective de la clé dans une deuxième position de butée.
[FIG. 5D] est une section selon X, X' de la [FIG. 5C].

Les deux premiers schémas présentent des vues d'ensemble de l'actionneur de sélection proposé. La commande interne est composée d'un axe 1 autour duquel est monté un chariot de passage 2. Le chariot est solidaire d'une clé d'interverrouillage 6, autorisant par son déplacement en rotation autour de l'axe 1, la sélection de l'une ou l'autre de deux lignes de vitesses. L'actionneur de sélection proprement dit comporte la clé d'interverrouillage 6 tournant avec l'axe de commande 1, pour sélectionner l'une d'au moins deux lignes de vitesses en verrouillant simultanément les lignes non sélectionnées.

Le chariot de passage 2 est déplacé en translation axiale sur la clé 6, par un actionneur de passage spécifique, non représenté. Le dispositif de commande concerné, comporte au moins deux lignes de sélection.

La clé 6 est solidaire en rotation, du chariot 2. Sur chaque ligne de vitesses, un doigt 2b appartenant à la clé 6, est engagé dans un crabot fixe 3 ou 4. Un moteur électrique 9 accouplé à un réducteur de vitesse 9a assure l'entraînement en rotation de la clé 6. Le moteur est accouplé à un réducteur 9a monté sur une platine 9b, rapportée sur un carter 16 de la boîte. L'ensemble moteur 9, réducteur 9a, est monté sur la platine 9b. La platine 9b est fixée sur le carter, par des vis 10. L'ensemble constitué, du moteur électrique, du réducteur et de la platine, est ainsi vissé sur le carter 16.

Un levier 11, est monté sur l'axe de sortie 9c du réducteur 9a. Il est fixé par une première extrémité sur un axe d'actionnement tournant dans les deux sens, et agit mécaniquement sur le chariot 2 par sa deuxième extrémité. La clé d'interverrouillage 6 est entraînée en rotation par le levier 11. Une rotule 11a est sertie à l'extrémité du levier 11. Elle passe au travers d'une ouverture allongée de la platine 9b et du carter 0b.

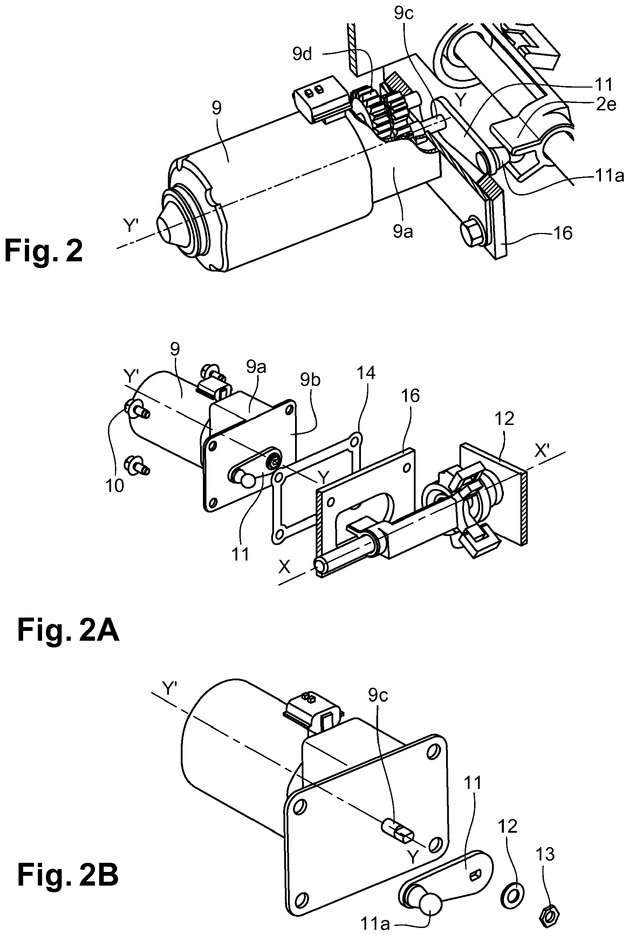

Sur la [FIG. 2], on voit l'engrenage de réduction 9d du réducteur 9a, au derrière son carter. On y reconnaît également le levier 11 monté sur l'extrémité d'axe de sortie 9c du réducteur. L'axe d'actionnement est entraîné en rotation par le moteur d'actionnement tournant dans les deux sens.

Sur la [FIG. 2A], on voit successivement, de la gauche vers la droite, le moteur 9 avec ses vis de fixation, le réducteur 9a, la platine 9b, avec le levier 11, un joint 14 intercalé entre la platine et le carter 0b, et la clé 6, montée sur un autre élément de bâti 17. Le carter 16 présente une ouverture au travers de laquelle le levier 11 pénètre à l'intérieur de la boîte, en direction du chariot. La rotule 11a du levier 11 coopère avec deux pattes radiales 2e du chariot.

La [FIG. 2B] met en évidence le montage de l'ensemble levier 11 / rotule 11a, sur l'axe de sortie 9c du moteur 9. L'extrémité de l'axe 9c est de préférence filetée et munie d'un méplat. Une forme similaire sur le moyeu du levier 11 permet son indexage angulaire. Le levier 11 est finalement maintenu par une rondelle 12 et un écrou 13.

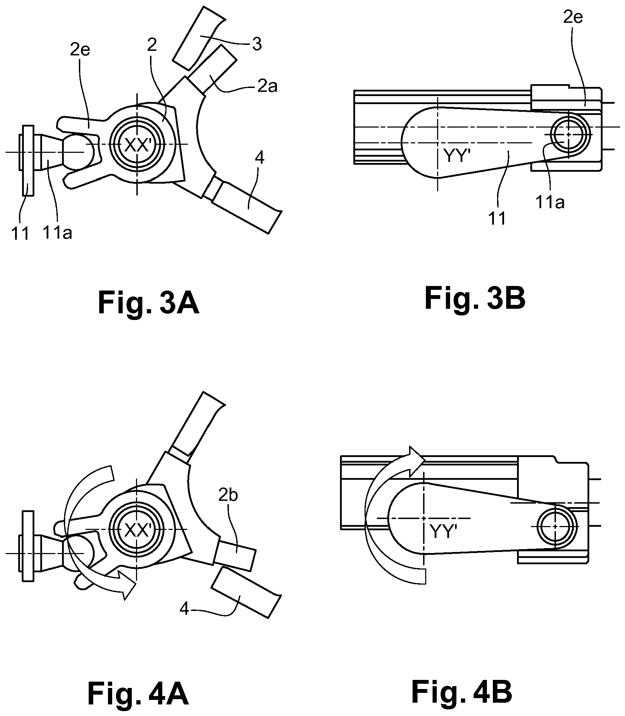

Le fonctionnement de l'invention est illustré par les schémas suivants. Sur la [FIG. 3A] et la FIG. 3B], le doigt 2b est engagée dans le crabot 4. Le levier 11 est dans sa position « haute ». Lorsque le moteur électrique 9 entraine en rotation le levier 11 autour de l'axe Y ; Y' dans le sens horaire, le levier 11 entraîne le chariot 2 par l'une des pattes radiales 2e, définissant le logement en forme de U qui enserre la rotule 11a.

Le chariot 2 effectue une rotation autour de l'axe X ; X'. Il place le doigt 2a dans le crabot 3 sur la figure [FIG. 4A]. Pour replacer le chariot 2 dans la première position le moteur 9 tourne en sens contraire, faisant tourner le levier 11 en sens inverse.

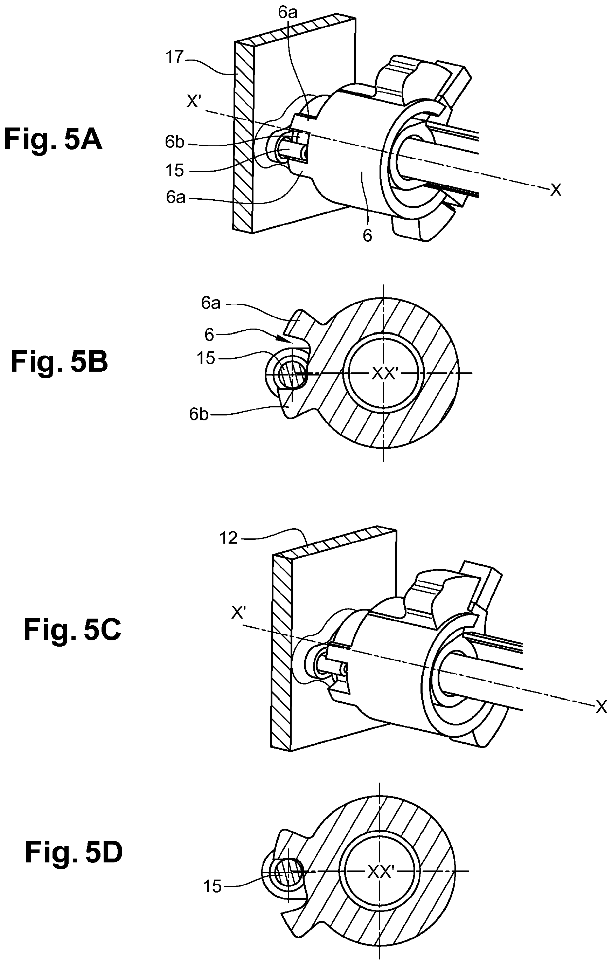

Les schémas suivants illustrent le débattement de la clé 6 autour du pion 15. Le moteur 9 contrôle le déplacement en rotation de la clé 6 dans les deux sens. Le déplacement angulaire de la clé et du chariot par le moteur sont limités par le débattement de la clé 6 autour du pion fixe 15 inséré dans l'élément de bâti 17 de la boîte. Le pion 15 est reçu dans une ouverture 6b de la clé délimitée par les bras 6a axiaux de celle-ci en direction de m'élément de carter 17. Ses déplacements sont stoppés lorsque l'un des deux bras 6a, vient buter sur le pion 15. La [FIG. 5A] et la [FIG. 5B] correspondent à une première position de butée, la [FIG. 5C] et la [FIG. 5D] à une deuxième position de butée. Cette disposition dispense l'actionneur de posséder un ressort de rappel en sélection pour la clé.

## Revendications

1. Actionneur de sélection de commande interne de boîte de vitesses comportant une clé d'interverrouillage (6) tournant avec un axe de commande (1) pour sélectionner l'une d'au moins deux lignes de vitesses en verrouillant simultanément les lignes non sélectionnées, et solidaire en rotation d'un chariot de passage (2), **caractérisé en ce que** la clé d'interverrouillage (6) est entraînée en rotation par un levier (11) qui est fixé par une première extrémité sur l'axe (9c) d'un moteur d'actionnement (9) tournant dans les deux sens, et agit mécaniquement sur le chariot (2) par sa deuxième extrémité portant une rotule (11a), ladite rotule (11a) coopérant avec deux pattes radiales (2e) du chariot (2) définissant un logement en forme de U pour la rotule (11a).

2. Actionneur de sélection selon la revendication 1, **caractérisé en ce que** l'axe d'actionnement (1) est entraîné en rotation par un moteur d'actionnement (9) tournant dans les deux sens.

3. Actionneur de sélection selon la revendication 2, **caractérisé en ce que** le moteur (9) est accouplé à un réducteur (9a) monté sur une platine (9b) rapportée sur un carter (16) de la boîte.

4. Actionneur de boîte selon la revendication 3, **caractérisé en ce que** l'ensemble constitué du moteur électrique (9), du réducteur (9a) et de la platine (9b), est vissé sur le carter (16) .

5. Actionneur de sélection selon la revendication 4, **caractérisé en ce que** le carter de boîte (16) présente une ouverture au travers de laquelle le levier (11) pénètre à l'intérieur de la boîte en direction du chariot (2).

6. Actionneur de sélection selon l'une des revendications précédentes, **caractérisé en ce que** le déplacement angulaire de la clé d'interverrouillage (6) et du chariot (2) par le moteur d'actionnement (9), est limité par le débattement de la clé (6) autour d'un pion fixe (15) inséré dans un élément de carter 17 de la boîte.

7. Actionneur de sélection selon la revendication 6, **caractérisé en ce que** le pion (15) est reçu dans une ouverture (6b) de la clé délimitée par deux avancées axiales (6a) de celle-ci en direction de l'élément de carter (17).

8. Dispositif de commande interne de boîte de vitesses, comportant un actionneur de sélection conforme à l'une des revendications précédentes, **caractérisé en ce que** le chariot de passage (2) est déplacé en translation axiale sur la clé (6), par un actionneur de passage spécifique.

9. Dispositif de commande interne selon la revendication 8, **caractérisé en ce qu'**il comporte au moins deux lignes de sélection.

## Patentansprüche

1. Wählaktuator zur internen Steuerung eines Wechselgetriebes, umfassend einen Verriegelungsschlüssel (6), der mit einer Steuerachse (1) dreht, um mindestens eine von mindestens zwei Ganggassen zu wählen, indem gleichzeitig die nicht gewählten Ganggassen verriegelt werden, und drehfest mit einem Schaltschlitten (2) ist, **dadurch gekennzeichnet, dass** der Verriegelungsschlüssel (6) von einem Hebel (11) drehangetrieben wird, der über ein erstes Ende auf der Achse (9c) eines in beide Richtungen drehenden Betätigungsmotors (9) befestigt ist und mechanisch auf den Schlitten (2) über sein zweites Ende wirkt, das ein Kugelgelenk (11a) trägt, wobei das Kugelgelenk (11a) mit zwei radialen Laschen (2e) des Schlittens (2) zusammenwirkt, die eine U-förmige Aufnahme für das Kugelgelenk (11a) definieren.

2. Wählaktuator nach Anspruch 1, **dadurch gekennzeichnet, dass** die Betätigungsachse (1) von einem in beide Richtungen drehenden Betätigungsmotor (9) drehangetrieben wird.

3. Wählaktuator nach Anspruch 2, **dadurch gekennzeichnet, dass** der Motor (9) an ein Untersetzungsgetriebe (9a) gekuppelt ist, das auf einer Platte (9b) montiert ist, die an ein Gehäuse (16) des Wechselgetriebes angesetzt ist.

4. Wechselgetriebeaktuator nach Anspruch 3, **dadurch gekennzeichnet, dass** die aus dem Elektromotor (9), dem Untersetzungsgetriebe (9a) und der Platte (9b) bestehende Einheit an das Gehäuse (16) geschraubt ist.

5. Wählaktuator nach Anspruch 4, **dadurch gekennzeichnet, dass** das Wechselgetriebegehäuse (16) eine Öffnung aufweist, durch die hindurch der Hebel (11) in das Innere des Wechselgetriebes in Richtung des Schlittens (2) eindringt.

6. Wählaktuator nach einem der vorhergehenden Ansprüche, **dadurch gekennzeichnet, dass** die Winkelverlagerung des Verriegelungsschlüssels (6) und des Schlittens (2) durch den Betätigungsmotor (9) durch den Ausschlag des Schlüssels (6) um einen festen Stift (15) herum, der in ein Gehäuseelement 17 des Schaltgetriebes eingesetzt ist, begrenzt wird.

7. Wählaktuator nach Anspruch 6, **dadurch gekennzeichnet, dass** der Stift (15) in einer Öffnung (6b) des Schlüssels aufgenommen wird, die durch zwei axiale Vorsprünge von diesem in Richtung des Gehäuseelements (17) begrenzt wird.

8. Vorrichtung zur internen Steuerung eines Wechselgetriebes, umfassend einen Wählaktuator nach einem der vorhergehenden Ansprüche, **dadurch gekennzeichnet, dass** der Schaltschlitten (2) auf dem Schlüssel (6) durch einen spezifischen Schaltaktuator axial translatorisch verlagert wird.

9. Vorrichtung zur internen Steuerung nach Anspruch 8, **dadurch gekennzeichnet, dass** sie mindestens zwei Wählgassen umfasst.

## Claims

1. Internal control selection actuator for a gearbox, having an interlocking key (6) that rotates with a control shaft (1) so as to select one of at least two lines of gears by simultaneously locking the unselected lines, and rotates as one with a shifting carriage (2), **characterized in that** the interlocking key (6) is driven in rotation via a lever (11) that is fastened by a first end to the shaft (9c) of an actuating motor (9) that rotates in both directions, and acts mechanically on the carriage (2) via its second end bearing a ball joint (11a), said ball joint (11a) cooperating with two radial tabs (2e) of the carriage (2), defining a U-shaped recess for the ball joint (11a).

2. Selection actuator according to Claim 1, **characterized in that** the actuating shaft (1) is driven in rotation by an actuating motor (9) that rotates in both directions.

3. Selection actuator according to Claim 2, **characterized in that** the motor (9) is coupled to a reduction gear (9a) mounted on a plate (9b) that is attached to a casing (16) of the gearbox.

4. Gearbox actuator according to Claim 3, **characterized in that** the assembly made up of the electric motor (9), the reduction gear (9a) and the plate (9b) is screwed onto the casing (16).

5. Selection actuator according to Claim 4, **characterized in that** the gearbox casing (16) has an opening through which the lever (11) enters into the gearbox in the direction of the carriage (2).

6. Selection actuator according to one of the preceding claims, **characterized in that** the angular movement of the interlocking key (6) and of the carriage (2) by the actuating motor (9) is limited by the range of movement of the key (6) about a fixed pin (15) inserted into a casing element 17 of the gearbox.

7. Selection actuator according to Claim 6, **characterized in that** the pin (15) is received in an opening (6b) in the key that is delimited by two axial projections (6a) thereof in the direction of the casing element (17).

8. Internal control device for a gearbox, having a selection actuator in accordance with one of the preceding claims, **characterized in that** the shifting carriage (2) is moved in axial translation on the key (6) by a specific shifting actuator.

9. Internal control device according to Claim 8, **characterized in that** it has at least two selection lines.
